# EUROPÄISCHE PATENTSCHRIFT

(11) **EP 3 799 379 B1**
(45) Veröffentlichungstag und Bekanntmachung des Hinweises auf die Patenterteilung: **01.03.2023**
(21) Anmeldenummer: 19200169.1
(22) Anmeldetag: 27.09.2019
(51) Int. Cl.: H04L 9/40, H04L 69/40, H04L 65/1016, H04L 65/1033, H04L 65/1046, H04L 65/1104, H04L 65/1045, H04L 67/14

(54) **VERFAHREN UND IP-BASIERTES KOMMUNIKATIONSSYSTEM ZUM WECHSELN VON VERBINDUNGS-STEUERUNGSINSTANZEN OHNE NEUREGISTRIERUNG VON ENDTEILNEHMERN**
METHOD AND IP-BASED COMMUNICATION SYSTEM FOR CHANGING CONNECTION CONTROL INSTANCES WITHOUT REREGISTRATION OF END SUBSCRIBERS
PROCÉDÉ ET SYSTÈME DE COMMUNICATION À BASE D'IP PERMETTANT DE CHANGER LES INSTANCES DE COMMANDE DE CONNEXION SANS NOUVEL ENREGISTREMENT DES ABONNÉS FINAUX

(43) Veröffentlichungstag der Anmeldung: 31.03.2021
(73) Patentinhaber: Deutsche Telekom AG, 53113 Bonn (DE)
(72) Erfinder: SCHOTT, Roland, 61231 Bad Nauheim (DE); GRIMM, Lothar, 79104 Freiburg (DE); BOUSSOUAB, Taoufik, 65929 Frankfurt/Main (DE); VON KEISER, Moritz-Jesco, 65388 Schlangenbad (DE); JESSKE, Roland, 69514 Laudenbach (DE)
(74) Vertreter: Blumbach · Zinngrebe Patentanwälte PartG mbB

(56) Entgegenhaltungen:
- EP-A1- 2 842 294
- DE-A1-102006 014 594
- US-A1- 2010 082 977
- US-A1- 2012 042 084

## Beschreibung

Die Erfindung betrifft ein Verfahren zum Wechseln von Verbindungs-Steuerungsinstanzen ohne Neuregistrierung von Endteilnehmern, die zuvor an einem IP-basierten Kommunikationssystem unter Anwendung eines IP-basierten Signalisierungsprotokolls registriert werden.

Seit geraumer Zeit werden zahlreiche Anstrengungen unternommen, um Benutzern von mobilen Kommunikationsendgeräten und Festnetz-Endgeräten multimediale Dienste insbesondere zur Übertragung von Sprache, Musik, Texte, Filme und Videos bereitzustellen. Hierzu wurde u.a. ein flexibles Kommunikationssystem auf der Grundlage des Internetprotokolls entwickelt, welches ein Kernnetz enthält, an welches Benutzer verschiedener Kommunikationsendgeräte über entsprechende Zugangsnetze angebunden können. Häufig werden in diesem Zusammenhang Begriffe wie Next Generation Network (NGN), Session Initiation Protokoll (SIP) und Internet Multimedia Subsysteme (IMS) verwendet.

Um die über ein flexibles IP-basiertes Kommunikationssystem bereitgestellten Multimediadienste nutzen zu können, müssen sich die Benutzer der verschiedenen Kommunikationsendgeräte typischerweise zuvor an dem IP-basierten Kommunikationssystem registrieren. Bei einem IMS-Kommunikationssystem werden Endteilnehmer insbesondere unter Mitwirkung sogenannter P-CSCF- und S-CSCF-Instanzen registriert, d.h. authentifiziert und gegebenenfalls auch autorisiert, wobei jeder Teilnehmer einer P-CSCF-Instanz zugeordnet ist. Die Abkürzung P-CSCF steht für Proxy Call Session Control Function, während die Abkürzung S-CSCF für Serving Call Session Control Function steht. Fällt eine P-CSCF-Instanz aus, müssen insbesondere Signalisierungsnachrichten der betroffenen Endteilnehmer auf eine andere P-CSCF-Instanz umgeleitet werden. Allerdings ist bisher notwendig, dass der oder die Endteilnehmer, deren P-CSCF-Instanz ausgefallen ist, erneut am IP-basierten Kommunikationssystem registriert, also zumindest authentifiziert werden müssen. Fällt beispielsweise ein ganzer Standort mit mehreren P-CSCF-Instanzen aus, kann dies bei einem Wechsel der ausgefallenen P-CSCF-Instanzen zu Registrierungsstürmen führen, da sich alle Endteilnehmer des ausgefallenen Standorts kurzfristig neu registrieren müssen. Um derartige Registrierungsstürme auffangen zu können, sind die jeweiligen Netzknoten des IMS-Kommunikationssystems entsprechend ausgebaut, was hohe Kosten nach sich zieht. Darüber hinaus vergehen bei der Neuregistrierung viele Minuten, in denen es zu erheblichen Beeinträchtigungen laufender Dienste kommen kann.

Der Stand der Technik ist aus EP 2 842 294 A1 und DE 10 2006 014594 A1 bekannt.

5

Der vorliegenden Erfindung liegt daher die Aufgabe zugrunde, ein Verfahren und ein IP-basiertes Kommunikationssystem zur Verfügung zu stellen, mit denen Neuregistrierungsstürme von Endteilnehmern bei einem partiellen Systemausfall verhindert und damit zusammenhängende Beeinträchtigungen von laufenden Diensten vermieden werden können.

Ein Kerngedanke der Erfindung kann darin gesehen werden, anstelle einer Neuregistrierungsanforderung eine Wiederholungsregistrierungsanforderung bei Ausfall einer Verbindungs-Steuerungsinstanz zu senden, wobei eine bereits bestehende gültige Registrierung des wenigstens einen Endteilnehmers auch bei einem Wechsel der ausgefallenen Verbindungs-Steuerungsinstanz auf eine Ersatz-Verbindungs-Steuerungsinstanz weiterhin benutzt werden kann. Hierzu werden nach einer erfolgreichen Authentifizierung der Endteilnehmer endteilnehmerbezogene Registrierungsdaten in einer gemeinsam genutzten Datenbank, die zumindest wirksam mit dem IP-basierten Kommunikationssystem verbunden ist, gespeichert. Auf die endteilnehmerbezogenen Registrierungsdaten kann nach Ausfall der primären Verbindungs-Steuerungsinstanz die Ersatz-Verbindungs-Steuerungsinstanz zugreifen.

Das oben genannte technische Problem wird durch die Verfahrensschritte des Anspruchs 1 und durch die Merkmale des Anspruchs 12 gelöst.

Vorteilhafte Weiterbildungen sind Gegenstand der Unteransprüche.

Die Erfindung wird anhand zweier Ausführungsbeispiele in Verbindung mit den beiliegenden Zeichnungen näher erläutert. Es zeigen:
- Figur 1: ein beispielhaftes IP-basiertes Kommunikationssystem, an welches wenigstens ein Endgerät über ein Zugangsnetz anschließbar ist, und
- Figur 2: ein weiteres beispielhaftes IP-basiertes Kommunikationssystem, an welches wenigstens ein Endgerät über ein Zugangsnetz angeschlossen ist.

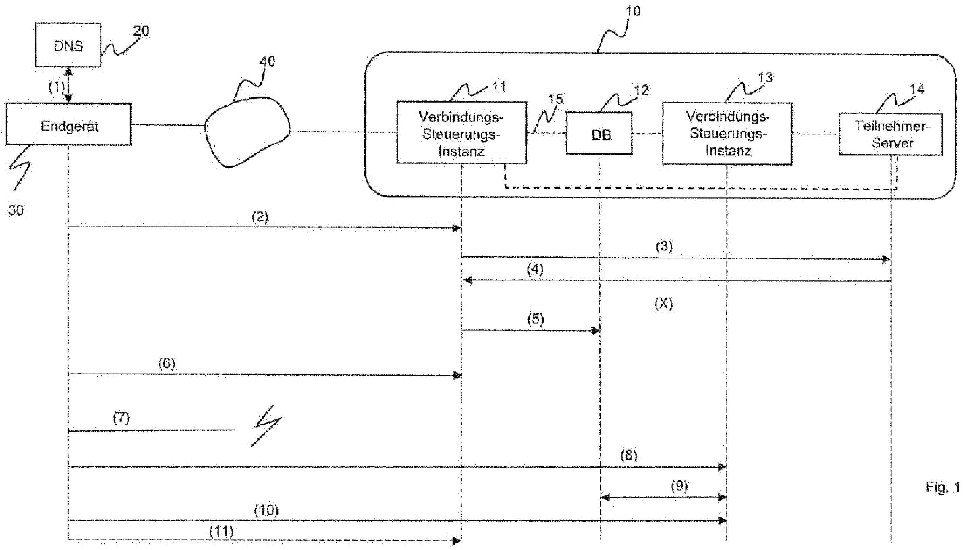

Figur 1 zeigt ein beispielhaftes IP-basiertes Kommunikationssystem 10, welches ein Kernnetz 15 aufweist, welches durch gestrichelte Verbindungslinien symbolisiert ist. Das IP-basierte Kommunikationssystem 10 ermöglicht insbesondere die Steuerung und Übertragung von multimedialen Daten zwischen Telekommunikationsendgeräten, die über verschiedene Zugangsnetzwerke mit dem IP-Kommunikationssystem 10 verbunden werden können. Bei dem in Figur 1 gezeigten Ausführungsbeispiel ist lediglich ein Endgerät 30 dargestellt, das über ein Zugangsnetz 40, welches beispielsweise ein Mobilfunknetz oder ein Festnetz sein kann, angeschlossen werden kann. Das lediglich ausschnittsweise dargestellte IP-Kommunikationssystem 10 weist beispielsweise mindestens zwei Verbindungs-Steuerungs-Instanzen 11 und 13 auf, die jeweils in einem separaten Hardware-Server implementiert sein können. Die Verbindungs-Steuerungsinstanzen, welche auch als Sitzungs-Steuerungsfunktionen bezeichnet werden können, wirken insbesondere bei der initialen Registrierung des Endgeräts 30 und/oder des Nutzers am IP-basierten Kommunikationssystem 10 und bei der Überprüfung von Registrierungszuständen zuvor registrierter Endgeräte und/oder deren Nutzer mit. Weiterhin ist innerhalb des IP-basierten Kommunikationsnetzes 10 ein Teilnehmerserver 14 vorgesehen, der eine Datenbank aufweist, in der insbesondere Benutzerkennungen, Kennwörter, IP-Adressen, Zugangsberechtigungen und weitere Informationen einer Vielzahl von Teilnehmern, hinterlegt sind, die unter anderem bei der Registrierung, d.h. der Authentisierung und gegebenenfalls Autorisierung von Teilnehmern benötigt werden. Das IP-Kommunikationssystem 10 kann weiterhin eine gemeinsam genutzte Datenbank 12 enthalten, die optional aber auch außerhalb des IP-Kommunikationssystems angeordnet, aber mit diesem funktional verbunden sein kann. Angemerkt sei, dass den beiden Verbindungs-Steuerungsinstanzen 11 und 13, der Datenbank 12 und dem Teilnehmerserver 14 jeweils eine eigene IP-Adresse zugeordnet sein kann. Die beiden Verbindungs-Steuerungsinstanzen 11 und 13 sind vorzugsweise mit den Teilnehmerserver 14 verbunden.

Ferner ist ein sogenannter Domain Name Server 20 vorhanden, in welchem beispielsweise die IP-Adressen der Verbindungs-Steuerungsinstanzen 11 und 13 hinterlegt sind.

Nunmehr wird die Funktionsweise des in Figur 1 gezeigten Systems insbesondere hinsichtlich eines Wechsels von Verbindungs-Steuerungs-Instanzen erläutert, ohne dass eine neue Registrierung von Endteilnehmern, die zuvor an dem IP-basierten Kommunikationssystem 10 unter Anwendung eines IP-basierten Signalisierungsprotokolls registriert werden, erfolgen muss. Bei dem IP-basierten Signalisierungsprotokoll kann es sich beispielsweise um das Session Initiation Protocol (SIP) handeln, welches zur Ausführung verschiedener Registrierungsverfahren angewendet werden kann. Angemerkt sei, dass im Rahmen der Erfindung beliebige Registrierungsverfahren beispielsweise unter Verwendung des Challenge-Response-Verfahrens, welches beispielsweise in dem Fachbuch "Siegmund Gerd, Technik der Netze 2, Hüthig Verlag, 6. Auflage" ausführlich beschrieben ist, zum Einsatz kommen können.

Angenommen sei nunmehr, dass das Endgerät 30 bzw. dessen Benutzer erstmalig am IP-Kommunikationssystem 10 registriert werden soll. Das Endgerät 30 ist dazu konfiguriert, in Schritt 1 zunächst die IP-Adressen der Verbindungs-Steuerungsinstanzen 11 und 13 vom Domain Name Server 20 abzurufen. Ferner ist das Endgerät 30 dazu konfiguriert, die Verbindungs-Steuerungsinstanz 11 als primäre Verbindungs-Steuerungsinstanz und die Verbindungs-Steuerungsinstanz 13 als Ersatz-Verbindungs-Steuerungsinstanz zu verwenden.

Der Einfachheit halber sei angenommen, dass es sich bei dem Endgerät 30 um ein SIP-basiertes Endgerät handeln kann. In an sich bekannter Weise kann vor der erstmaligen Registrierung eine verschlüsselte oder unverschlüsselte Kommunikationsverbindung vom Endgerät 30 über das Zugangsnetz 40 zur primären Verbindungs-Steuerungsinstanz 11 aufgebaut werden. Bei dem erläuterten Beispiel wird eine unverschlüsselte Kommunikationsverbindung aufgebaut.

In Schritt 2 wird vom Endgerät 30 eine Registrierungsanforderung zur ersten, d. h. primären Verbindungs-Steuerungsinstanz 11 übertragen. Die Registrierungsanforderung kann zum Beispiel als Nutzdaten eines Pakets betrachtet werden. Im letzteren Fall enthält die Registrierungsanforderung im Header vorzugsweise die IP-Adresse der primären Verbindungs-Steuerungsinstanz 11 bzw. die IP-Adresse des Servers, in der die primäre Verbindungs-Steuerungsinstanz 11 implementiert ist, und als Nutzdaten zum Beispiel eine Nutzeridentifikation, zum Beispiel die Rufnummer des Endgeräts 30 sowie beispielsweise ein Passwort des Nutzers des Endgeräts 30. Die primäre Verbindungs-Steuerungsinstanz 11 ist dazu ausgebildet, unter Ansprechen auf die empfangene Registrierungsanforderung eine Authentifizierung und gegebenenfalls Autorisierung des Endgeräts 30 einzuleiten oder selbst durchzuführen. Denkbar ist, dass hierzu die Registrierungsanforderung von der primären Verbindungs-Steuerungsinstanz 11, die die IP-Adresse des Teilnehmerservers 14 kennt, zum Teilnehmerserver 14 übertragen wird, der insbesondere unter Ansprechen auf die in der Registrierungsanforderung enthaltene Nutzeridentifikation und auf das Passwort eine Authentifizierung und Autorisierung durchführen kann. Denkbar ist allerdings auch, dass die erste Verbindungs-Steuerungsinstanz 11 die im Teilnehmerserver 14 für das Endgerät 30 bzw. dessen Nutzer hinterlegten Daten abfragt und dann selbst die Authentifizierung und Autorisierung durchführt. Dieses Verfahren ist in Figur 1 durch die Schritte 3 und 9 angedeutet.

Wurde eine erfolgreiche Authentifizierung und gegebenenfalls Autorisierung des Endteilnehmers 30 durchgeführt, so werden in Schritt 5 vorbestimmte endteilnehmerbezogene Registrierungsdaten, das sind u.a. die Nutzeridentifikation des Endgeräts 30 in der gemeinsam genutzten Datenbank 12 gespeichert. Denkbar ist, dass die endteilnehmerbezogenen Registrierungsdaten auch in einem Cache des Servers, in dem die Verbindungs-Steuerungsinstanz 11 installiert ist, zwischengespeichert werden können. Als vorbestimmte endteilnehmerbezogene Registrierungsdaten des Endgeräts 30 können beispielsweise die IP-Adresse des Endgeräts 30 und/oder die Nutzeridentifikation und/oder die IP-Adresse der Verbindungs-Steuerungsinstanz 11 gespeichert werden. Nunmehr liegt eine gültige Registrierung des Endgeräts 30 bzw. dessen Nutzers vor.

Je nach Implementierung kann vorgesehen sein, dass das Endgerät 30 eine Wiederholungs-Registrierungsanforderung zur primären Verbindungs-Steuerungsinstanz 11 überträgt, in der beispielsweise die Nutzeridentifikation, das Passwort, die IP-Adresse des Endgeräts 30 und die IP-Adresse der Verbindungs-Steuerungsinstanz 11 enthalten sind. Die Wiederholungs-Registrierungsanforderung kann zum Beispiel als Nutzdaten eines Pakets betrachtet werden. Die primäre Verbindungs-Steuerungsinstanz 11 prüft unter Ansprechen auf die empfangene Wiederholungs-Registrierungsanforderung, ob eine gültige Registrierung des Endgeräts 30 vorliegt. Sofern die vorbestimmten endteilnehmerbezogenen Registrierungsdaten in einem Cache des Servers, in dem die Verbindungs-Steuerungsinstanz 11 installiert ist, gespeichert sind, kann die Verbindungs-Steuerungsinstanz 11 sofort einen Vergleich der vorbestimmten endteilnehmerbezogenen Registrierungsdaten mit den in der Wiederholungs-Registrierungsanforderung enthaltenen Daten vornehmen. Andernfalls muss die Verbindungs-Steuerungsinstanz 11 auf die gemeinsam genutzte Datenbank 12 zugreifen und die entsprechenden endteilnehmerbezogenen Registrierungsdaten herunterladen. In regelmäßigen Zeitabständen überträgt das Endgerät 30 erneut eine Wiederholungs-Registrierungsanforderung, die dann wiederum durch die erste Verbindungs-Steuerungsinstanz 11 geprüft wird, um die Gültigkeit der Registrierung des Endteilnehmers 30 feststellen zu können. Dies ist in Figur 1 durch den Schritt 6 symbolisiert. Gegebenenfalls kann eine gültige Registrierung des Teilnehmers 30 am IP-Kommunikationssystem 10 je nach Implementierung nach Ablauf einer vorbestimmten Zeitdauer automatisch gelöscht werden.

Dieser spezielle Fall wird jedoch hier nicht weiter erläutert.

Stattdessen wird der Fall betrachtet, dass während des ordnungsgemäßen Betriebs ein Ausfall der primären Verbindungs-Steuerungsinstanz 11 in Schritt 7 festgestellt wird. Ein solcher Ausfall kann beispielsweise vom Endgerät 30 festgestellt werden, wenn beispielsweise die primäre Verbindungs-Steuerungsinstanz 11 auf eine vorbestimmte Anzahl von Wiederholungs-Registrierungsanforderungen des Endteilnehmers 30 nicht reagiert hat.

Das Endgerät 30 ist dazu konfiguriert, nach dem Feststellen des Ausfalls der Verbindungs-Steuerungsinstanz 11 eine verschlüsselte oder unverschlüsselte Kommunikationsverbindung zu der Ersatz-Verbindungs-Steuerungsinstanz 13 aufzubauen, möglicherweise in Abhängigkeit davon, ob zuvor eine verschlüsselte oder unverschlüsselte Kommunikationsverbindung zur primären Verbindungs-Steuerungsinstanz 11 aufgebaut worden ist. Angemerkt sei, dass zum Aufbau der Kommunikationsverbindung zur Ersatz-Verbindungs-Steuerungsinstanz 13 dieselben Kommunikationsprotokolle und gegebenenfalls Verschlüsselungsmechanismen wie beim Aufbau der ursprünglichen Kommunikationsverbindung zur primären Verbindungs-Steuerungsinstanz 11 verwendet werden.

Da zuvor eine unverschlüsselte Kommunikationsverbindung zur primären Verbindungs-Steuerungsinstanz 11 aufgebaut worden ist, wird nunmehr eine unverschlüsselte Kommunikationsverbindung zur Ersatz-Verbindungs-Steuerungsinstanz 13 aufgebaut. In Schritt 8 wird nunmehr eine Wiederholungs-Registrierungsanforderung vorzugsweise in Form eines IP-Pakets vom Endgerät 30 zur Ersatz-Verbindungsinstanz 13 übertragen. Diese Wiederholungs-Registrierungsanforderung unterscheidet sich von den in Schritt 6 übertragenen Wiederholungs-Registrierungsanforderungen an die primäre Verbindungs-Steuerungsinstanz 11 beispielsweise u.a. dadurch, dass anstelle der IP-Adresse der Verbindungs-Steuerungsinstanz 11 die IP-Adresse der Verbindungs-Steuerungsinstanz 13 bzw. die IP-Adresse des Servers, in der die Ersatz-Verbindungs-Steuerungsinstanz implementiert ist, enthalten ist.

Denkbar ist auch, dass nach einem Ausfall der primären Verbindungs-Steuerungsinstanz 11 anstelle einer Wiederholungs-Registrierungsanforderung zunächst eine Verbindungsaufbau-Nachricht zum Beispiel in Form eines IP-Pakets vom Endgerät 30 zur Ersatz-Verbindungs-Steuerungsinstanz 30 übertragen wird, mit der der Aufbau einer Sitzung zu einem Zielteilnehmer eingeleitet werden soll. Eine solche Verbindungsaufbau-Nachricht kann die gleichen Informationen wie eine Wiederholungs-Registrierungsanforderung enthalten, sodass die Ersatz-Verbindungs-Steuerungsinstanz 13 unter Ansprechen auf eine empfangene Wiederholungs-Registrierungsanforderung oder eine empfangene Verbindungsaufbau-Nachricht und anhand der in der gemeinsam genutzten Datenbank 12 hinterlegten endteilnehmerbezogenen Registrierungsdaten prüfen kann, ob eine gültige Registrierung des Endteilnehmers 30 vorliegt.

Stellt die Ersatz-Verbindungs-Steuerungsinstanz 13 fest, dass eine gültige Registrierung des Endteilnehmers, d.h. vorzugsweise des Nutzers des Endgeräts 30 vorliegt, wird dem IP-basierten Kommunikationssystem 10 signalisiert, dass nunmehr die zweite Verbindungs-Steuerungsinstanz 13 anstelle der ersten Verbindungs-Steuerungsinstanz 11 dem Endgerät 30 zugeordnet worden ist, und zwar ohne dass das Endgerät 30 bzw. dessen Nutzer erneut am IP-basierten Kommunikationssystem 10 registriert werden muss. Mit anderen Worten: Es findet ein Wechsel von der ausgefallenen Verbindungs-Steuerungsinstanz 11 auf die Ersatz-Verbindungs-Steuerungsinstanz 13 statt, ohne dass der betroffene Endteilnehmer erneut authentifiziert und gegebenenfalls autorisiert werden muss. Eine Information über den Wechsel der Verbindungs-Steuerungsinstanz kann von der Ersatz-Verbindungs-Steuerungsinstanz 13 in Schritt 9 zur Datenbank 12 übertragen und dort gespeichert werden. Im ordnungsgemäßen Betrieb können nunmehr in Schritt 10 zu regelmäßigen Zeitpunkten Wiederholungs-Registrierungsanforderungen vom Endgerät 30 zur Ersatz-Verbindungs-Steuerungsinstanz 13 übertragen werden, die in der zuvor beschriebenen Weise unter Ansprechen auf jede Wiederholungs-Registrierungsanforderung die gültige Registrierung des Endgeräts 30 bzw. dessen Nutzers prüfen kann.

Alternativ kann in dem IP-basierten Kommunikationssystem 10 ein alternatives Registrierungsverfahren angewendet werden, das wie folgt ablaufen kann:
Zunächst wird wiederum eine Registrierungsanforderung vom Endgerät 30 zur primären Verbindungs-Steuerungsinstanz 11 übertragen. Unter Mitwirkung der primären Verbindungs-Steuerungsinstanz 11 kann die Registrierungsnachricht zum Teilnehmerserver 14 weitergeleitet werden. Erkennt der Teilnehmerserver 14, dass es sich bei dem Endteilnehmer 30 um einen zulässigen Endteilnehmer handelt, kann der Teilnehmerserver 14 einen Sicherungsschlüssel, der dem Endteilnehmer 30 eindeutig zugeordnet ist, erzeugen und über die primäre Verbindungs-Steuerungsinstanz 11 zum Endgerät 30 übertragen. Bei dem Sicherungsschlüssel kann es sich um eine Zufallszahl handeln, die je nach Implementierung für eine definierte Zeitdauer gültig sein kann. Unter Ansprechen auf den empfangenen Sicherungsschlüssel kann das Endgerät 30 eine Bestätigungsnachricht zur primären Verbindungs-Steuerungsinstanz 11 übertragen, in der neben dem Sicherungsschlüssel zum Beispiel auch das Passwort des Nutzers und die IP-Adresse des Endgeräts 30 enthalten sein kann. Die Bestätigungsnachricht kann über die Verbindungs-Steuerungsinstanz 11 zum Teilnehmerserver 14 übertragen werden, der nunmehr die Authentifizierung und gegebenenfalls die Autorisierung des Endgeräts 30 unter Ansprechen auf die in der Bestätigungsnachricht enthaltenen Sicherungsschlüssel, die IP-Adresse und das Passwort durchführen kann. Wie bereits zuvor erläutert, werden nach erfolgreicher Authentifizierung vorbestimmte endteilnehmerbezogene Registrierungsdaten einschließlich des Sicherungsschlüssels von der primären Verbindungs-Steuerungsinstanz 11 zur gemeinsam genutzten Datenbank 12 übertragen. Nach einer erfolgreichen Registrierung erzeugt der Endteilnehmer 30 in regelmäßigen Zeitabständen Wiederholungs-Registrierungsanforderungen, die zusätzlich auch den Sicherungsschlüssel enthalten. Der Sicherungsschlüssel wird bei der Prüfung einer gültigen Registrierung durch die primäre Verbindungs-Steuerungsinstanz 11 mit ausgewertet.

Nunmehr wird wiederum der Fall betrachtet, dass während des ordnungsgemäßen Betriebs ein Ausfall der primären Verbindungs-Steuerungs-Instanz 11 festgestellt wird. Ein solcher Ausfall kann beispielsweise vom Endgerät 30 festgestellt werden, wenn beispielsweise die primäre Verbindungs-Steuerungsinstanz 11 auf eine vorbestimmte Anzahl von Wiederholungs-Registrierungsanforderungen des Endteilnehmers 30 nicht reagiert hat.

Das Endgerät 30 ist dazu konfiguriert, dass, nachdem der Ausfall der Verbindungs-Steuerungsinstanz 11 festgestellt worden ist, eine verschlüsselte oder unverschlüsselte Kommunikationsverbindung zu der Ersatz-Verbindungs-Steuerungsinstanz 13 aufbaut. Angenommen sei wiederum, dass eine unverschlüsselte Kommunikationsverbindung aufgebaut wird. Nunmehr wird eine Wiederholungs-Registrierungsanforderung vom Endgerät 30 zur Ersatz-Verbindungsinstanz 13 übertragen. Diese Wiederholungs-Registrierungsanforderung unterscheidet sich von der zuvor beschriebenen Wiederholungs-Registrierungsanforderung dadurch, dass sie neben der Nutzeridentifikation und/oder einem Passwort, und/oder der IP-Adresse der Verbindungs-Steuerungsinstanz 13 bzw. die IP-Adresse des Servers, in der die Ersatz-Verbindungs-Steuerungsinstanz implementiert ist, zusätzlich noch den Sicherungsschlüssel enthält, der auch in der gemeinsam genutzten Datenbank 12 gespeichert ist. Denkbar ist auch, dass nach einem Ausfall der primären Verbindungs-Steuerungsinstanz 11 anstelle einer Wiederholungs-Registrierungsanforderung zunächst eine Verbindungsaufbau-Nachricht vom Endgerät 30 zur Ersatz-Verbindungs-Steuerungsinstanz 30 übertragen wird, mit der der Aufbau einer Sitzung zu einem Zielteilnehmer eingeleitet werden soll. Eine solche Verbindungsaufbau-Nachricht kann die gleichen Informationen wie eine Wiederholungs-Registrierungsanforderung enthalten, sodass die Ersatz-Verbindungs-Steuerungsinstanz 13 unter Ansprechen auf eine empfangene Wiederholungs-Registrierungsanforderung oder eine empfangene Verbindungsaufbau-Nachricht und anhand der in der gemeinsam genutzten Datenbank 12 hinterlegten endteilnehmerbezogenen Registrierungsdaten prüfen kann, ob ein gültiger Sicherungsschlüssel und somit eine gültige Registrierung des Endgeräts bzw. des Nutzers des Endgeräts 30 vorliegt. Stellt die Ersatz-Verbindungs-Steuerungsinstanz 13 fest, dass eine gültige Registrierung des Endteilnehmers 30 vorliegt, wird dem IP-basierten Kommunikationssystem 10 signalisiert, dass nunmehr die zweite Verbindungs-Steuerungsinstanz 13 anstelle der ersten Verbindungs-Steuerungsinstanz 11 dem Endgerät 30 zugeordnet worden ist, und zwar ohne dass das Endgerät 30 bzw. dessen Nutzer erneut am IP-basierten Kommunikationssystem 10 registriert werden muss. Mit anderen Worten: Es findet ein Wechsel von der ausgefallenen Verbindungs-Steuerungsinstanz 11 auf die Ersatz-Verbindungs-Steuerungsinstanz 13 statt, ohne dass der betroffene Endteilnehmer erneut authentifiziert und gegebenenfalls autorisiert werden muss. Im ordnungsgemäßen Betrieb können nunmehr in Schritt 10 zu regelmäßigen Zeitpunkten Wiederholungs-Registrierungsanforderungen vom Endgerät 30 zur Ersatz-Verbindungs-Steuerungsinstanz 13 übertragen werden, die in der zuvor beschriebenen Weise unter Ansprechen auf jede Wiederholungs-Registrierungsanforderung die gültige Registrierung des Endgeräts 30 bzw. dessen Nutzers prüfen kann.

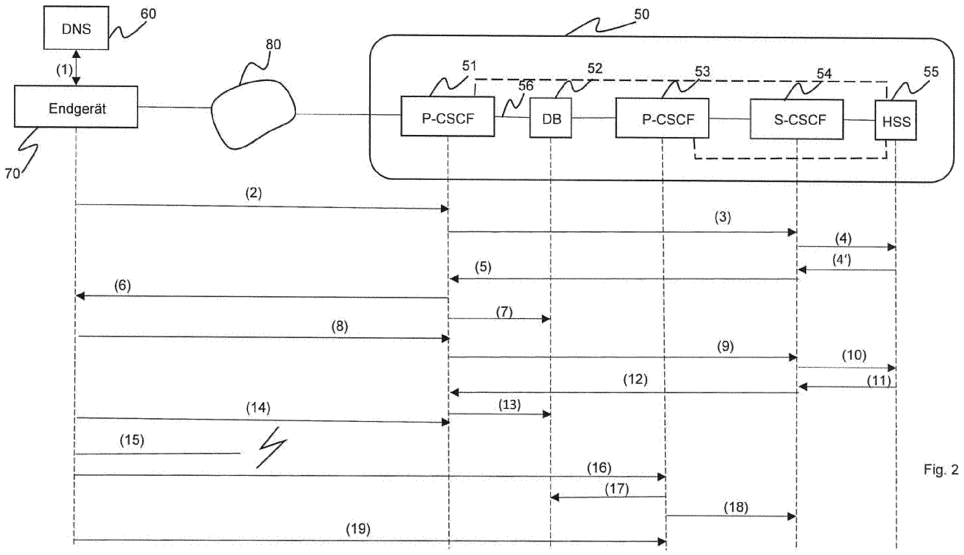

Nunmehr wird ein weiteres Ausführungsbeispiel, welches in Figur 2 dargestellt ist, betrachtet. Als beispielhaftes IP-basiertes Kommunikationsnetz wird ein modifiziertes IMS (IP Multimedia Subsystem) -Kommunikationssystem 50 erläutert. Es sei darauf hingewiesen, dass IMS-Kommunikationssysteme dem Fachmann hinlänglich bekannt sind. Sie sind beispielsweise in dem Fachbuch "Siegmund Gerd, Technik der Netze, Hüthig Verlag, 6. Auflage" beschrieben.

Das beispielhafte IP-basiertes Kommunikationssystem 50 weist ein Kernnetz 56 auf, welches durch gestrichelte Verbindungslinien symbolisiert ist. Das IP-basierte Kommunikationssystem 50 ermöglicht insbesondere die Steuerung und Übertragung von multimedialen Daten zwischen Telekommunikationsendgeräten, die über verschiedene Zugangsnetzwerke mit dem IP-Kommunikationssystem 50 verbunden werden können. Bei dem in Figur 2 gezeigten Ausführungsbeispiel ist lediglich ein Endgerät 70 dargestellt, das über ein Zugangsnetz 80, welches beispielsweise ein Mobilfunknetz oder ein Festnetz sein kann, angeschlossen werden kann. Das lediglich ausschnittsweise dargestellte IP-Kommunikationssystem 50 weist beispielsweise drei Verbindungs-Steuerungs-Instanzen 51, 53 und 54 auf, die jeweils in einem separaten Hardware-Server oder auch in einem gemeinsamen Hardware-Server implementiert sein können. Die Verbindungs-Steuerungsinstanzen, welche auch als Sitzungs-Steuerungsfunktionen (CSCF von Call Session Control Function) bezeichnet werden können, wirken, insbesondere bei der initialen Registrierung des Endgeräts 70 und/oder des Nutzers am IP-basierten Kommunikationssystem 50 und bei der Überprüfung von Registrierungszuständen zuvor registrierter Endgeräte und/oder deren Nutzer mit. Beim vorliegenden Beispiel sind der einfacheren Darstellung wegen lediglich zwei P-CSCF-Instanzen 51 und 53, d.h. zwei Proxy-Call-Session-Control-Function-Instanzen, sowie eine weitere Verbindungs-Steuerungsinstanz 54, die als S-CSCF-Instanz, d.h. Serving-Call-Session-Control-Function-Instanz, ausgebildet ist, dargestellt.

Weiterhin ist innerhalb des IP-basierten Kommunikationsnetzes 50 ein Teilnehmerserver 55 vorgesehen, der als Home Subscriber Server (HSS) 55 fungiert. Der HSS 55 kann eine Datenbank aufweisen, in der insbesondere Benutzerkennungen, Kennwörter, also z.B. Passwörter, sowie IP-Adressen und Zugangsberechtigungen einer Vielzahl von Teilnehmern hinterlegt sind, die unter anderem bei der Registrierung, d.h. der Authentisierung und gegebenenfalls Autorisierung von Teilnehmern benötigt werden. Weiterhin ist eine gemeinsam genutzte Datenbank 52 vorgesehen, die Teil des IP-basierten Kommunikationssystems 50 oder aber auch außerhalb des IP-Kommunikationssystems angeordnet sein kann. In diesem Fall ist die Datenbank 52 wirksam mit dem IP-basierten Kommunikationssystem 50 verbunden. Angemerkt sei, dass den Verbindungs-Steuerungsinstanzen 51, 53 und 54, der Datenbank 52 und dem HSS 55 jeweils eine eigene IP-Adresse zugeordnet sein kann. Die beiden Verbindungs-Steuerungsinstanzen 51 und 53 sind vorzugsweise ebenfalls mit dem Teilnehmerserver 55, d.h. der HSS, verbunden.

Ferner ist ein sogenannter Domain Name Server 60 vorgesehen, in welchem beispielsweise die IP-Adressen der P-CSCF-Instanzen 51 und 53 hinterlegt und abrufbar sind.

Nachfolgend wird eine beispielhafte Funktionsweise des in Figur 2 dargestellten Ausführungsbeispiels anhand eines beispielhaften Registrierungsverfahrens in Verbindung mit einem Wechsel der P-CSCF-Instanzen 51 und 53 erläutert.

Angemerkt sei, dass Signalisierungsinformationen unter Anwendung eines IP-basierten Signalisierungsprotokolls über das IP-basierte Kommunikationssystem 50 übertragen werden sollen. Bei dem IP-basierten Signalisierungsprotokoll kann es sich beispielsweise um das Session Initiation Protocol (SIP) handeln, welches zur Ausführung verschiedener Registrierungsverfahren angewendet werden kann. Angemerkt sei, dass im Rahmen der Erfindung beliebige Registrierungsverfahren unter Verwendung beispielsweise eines Challenge-Response-Verfahrens, welches beispielsweise in dem Fachbuch "Siegmund Gerd, Technik der Netze 2, Hüthig Verlag, 6. Auflage" ausführlich beschrieben ist, zum Einsatz kommen können.

Angenommen sei nunmehr, dass das Endgerät 70 bzw. dessen Benutzer erstmalig am IP-Kommunikationssystem 50 registriert werden soll. Angenommen sei ferner, dass das Endgerät 70 dazu konfiguriert worden ist, die P-CSCF-Instanz 51 als erste oder primäre Verbindungs-Steuerungsinstanz und die P-CSCF-Instanz 53 als zweite oder Ersatz-Verbindungs-Steuerungsinstanz zu verwenden.

Das Endgerät 70 kann dazu ausgebildet sein, in Schritt 1 zunächst eine Verbindung zum Domain Name Server 60 herzustellen und dort die aktuellen IP-Adressen der P-CSCF-Instanzen 51 und 53 abzufragen.

Um eine Registrierung einzuleiten, wird in Schritt 2 zunächst eine beispielsweise unverschlüsselte Kommunikationsverbindung unter Verwendung der IP-Adresse der P-CSCF-Instanz 51 vom Endgerät 70 zur P-CSCF-Instanz 51 aufgebaut und Registrierungsanforderung vom Endgerät 70 erzeugt und über das Zugangsnetz 80 zur primären P-CSCF-Instanz 51 übertragen. Die Registrierungsanforderung kann insbesondere eine Nutzeridentifikation und die IP-Adresse der primären P-CSCF-Instanz 51 enthalten. Die Nutzeridentifikation kann beispielsweise die Telefonnummer und/oder IP-Adresse des Endgeräts 70 enthalten. In Schritt 3 kann die Registrierungsanforderung beispielsweise von der primären P-CSCF-Instanz 51 zur S-CSCF-Instanz 54 übertragen werden, deren IP-Adresse der primären P-CSCF-Instanz 51 bekannt ist. In Schritt 4 überträgt die S-CSCF-Instanz 54 die Registrierungsanforderung zum HSS 55, der dazu ausgebildet sein kann, unter Ansprechen auf die Registrierungsanforderung zu erkennen, dass der Nutzer des Endgeräts 70 ein zugelassener Teilnehmer ist. Vorzugsweise unter Ansprechen auf die Feststellung, dass der Nutzer des Endgeräts 70 ein zugelassener Teilnehmer ist, wird anschließend ein Sicherungsschlüssel, der dem Endgerät 70 eindeutig zugewiesen wird, in der S-CSCF-Instanz 54 erzeugt, wobei zuvor in Schritt 4', d.h. vor der Erzeugung des Sicherungsschlüssels, der HSS 55 die S-CSCF-Instanz 54 darüber informiert, dass das Endgerät 70 und/oder dessen Nutzer ein zugelassener Teilnehmer ist. In Schritt 5 wird der Sicherungsschlüssel beispielsweise von der S-CSCF-Instanz 54 zur primären P-CSCF-Instanz 51 und anschließend in Schritt 6 von der P-CSCF-Instanz 51 zum Endgerät 70 und in Schritt 7 von der P-CSCF-Instanz 51 zur Datenbank 52 übertragen und dort jeweils gespeichert.

Unter Ansprechen auf den empfangenen Sicherungsschlüssel erzeugt das Endgerät 70 eine Bestätigungsnachricht bzw. eine weitere Registrierungsanforderung, in der zum Beispiel der Sicherungsschlüssel und vorzugsweise zumindest noch die Nutzeridentifikation des Endgeräts 70 enthalten sein können. In Schritt 9 kann die weitere Registrierungsanforderung vom Endgerät 70 zur P-CSCF-Instanz 51 und in Schritt 9 dann weiter zur S-CSCF-Instanz 54 und dann je nach Implementierung in einem Schritt 10 weiter zum HSS 55 übertragen werden. Unter Ansprechen auf die weitere Registrierungsanforderung kann nunmehr der Teilnehmerserver 55 die Authentifizierung und gegebenenfalls Autorisierung des Endgeräts 70 abgeschlossen werden. Eine erfolgreiche Authentifizierung des Endgeräts 70 wird dann in Schritt 11 der S-CSCF-Instanz 54 mitgeteilt. Sofern die S-CSCSF-Instanz 54 den Sicherungsschlüssel selbst erstellt hat, kann die Authentifizierung und gegebenenfalls Autorisierung des Endgeräts 70 auch von der S-CSCF-Instanz 54 ausgeführt werden. Hierzu kann, z. B. in den Schritten 10 und 11, die S-CSCF-Instanz 54 auf die entsprechenden im HSS 55 gespeicherten endgerätebezogenen Daten zugreifen.

War die Authentifizierung des Nutzers des Endgeräts bzw. des Endgeräts 70 erfolgreich, so werden vorbestimmte endteilnehmerbezogene Registrierungsdaten in Schritt 12 von der S-CSCF-Instanz 54 zur P-CSCF-Instanz 51 und von dort in Schritt 13 zur gemeinsam genutzten Datenbank 52 übertragen und dort gespeichert. Die endteilnehmerbezogenen Registrierungsdaten können vorzugsweise die IP-Adresse des Endgerätes 70, die Nutzeridentifikation des Endgeräts 70, den Sicherungsschlüssel, die Ablaufzeit des Sicherungsschlüssels, einen Zeitstempel und, sofern vorhanden, einen Verschlüsselungsschlüssel enthalten, der zuvor beim Aufbau einer verschlüsselten Verbindung beispielsweise gemäß dem TLS-Protokoll zwischen dem Endgerät 70 und der P-CSCF-Instanz 51 ausgehandelt worden ist und ebenfalls im Endgerät 70 gespeichert wird. Angemerkt sei, dass bei Verwendung eines Verschlüsselungsschlüssels die Erzeugung und Übertragung eines Sicherungsschlüssels nicht erforderlich ist.

Angemerkt sei hierzu, dass, wenn die Signalisierung über eine verschlüsselte Kommunikationsverbindung erfolgen soll, beispielsweise zunächst vom Endgerät 70 eine verschlüsselte Kommunikationsverbindung zur primären P-CSCF-Instanz 51 unter Aushandlung eines Verschlüsselungsschlüssels aufgebaut wird.

Im ordnungsgemäßen Betrieb und nach erfolgreicher Registrierung werden nunmehr in Schritt 14 vorzugsweise regelmäßig Wiederholungs-Registrierungsanforderungen vom Endgerät 70 zur P-CSCF-Instanz 51 übertragen, die beispielsweise den Sicherungsschlüssel, die IP-Adresse des Endgeräts und die IP-Adresse der P-CSCF-Instanz 51 enthält. Angemerkt sei, dass ein Sicherungsschlüssel nicht erforderlich ist, wenn in Schritt 2 eine verschlüsselte Verbindung beispielsweise gemäß dem TLS-Protokoll zwischen dem Endgerät 70 und der P-CSCF-Instanz 51 aufgebaut und der Verschlüsselungsschlüssel ausgehandelt worden ist. Unter Ansprechen auf die Wiederholungs-Registrierungsanforderung prüft die P-CSCF-Instanz 51, ob eine gültige Registrierung des Endgerätes 70 vorliegt. Hierzu kann die P-CSCF-Instanz 51 auf die in der gemeinsam genutzten Datenbank 52 gespeicherten endteilnehmerbezogenen Registrierungsdaten hinsichtlich des Endteilnehmers 70 zugreifen und insbesondere prüfen, ob für den Endteilnehmer 70 ein gültiger Sicherungsschlüssel vorliegt. Alternativ ist denkbar, dass die endteilnehmerbezogenen Daten zusätzlich in einem Zwischenspeicher eines Servers, in dem die primäre P-CSCF-Instanz 51 implementiert ist, zwischengespeichert werden. In diesem Fall muss die P-CSCF-Instanz 51 nicht auf die gemeinsam genutzte Datenbank 52 zugreifen.

Wird nunmehr in einem Schritt 15 festgestellt, dass die primäre P-CSCF-Instanz 51 ausgefallen ist, baut das Endgerät 70 beispielsweise eine unverschlüsselte Kommunikationsverbindung zu der zuvor festgelegten Ersatz-P-CSCF-Instanz 53 auf und überträgt in Schritt 16 eine Wiederholungs-Registrierungsanforderung oder eine Verbindungsaufbau-Nachricht zur Ersatz-P-CSCF-Instanz 53. In Schritt 14 kann der Ausfall der primären P-CSCF-Instanz 51 zum Beispiel durch das Endgerät 70 dadurch festgestellt werden, dass eine vorbestimmte Anzahl an Wiederholungs-Registrierungsanforderungen nicht von der primären P-CSCF-Instanz 51 bestätigt worden sind.

Gemäß einem vorteilhaften Ausführungsbeispiel enthält die Wiederholungs-Registrierungsanforderung oder die Verbindungsaufbau-Nachricht, auch als Invite-Nachricht bekannt, beispielsweise die IP-Adresse der Ersatz-P-CSCF-Instanz 53, den Sicherungsschlüssel und die IP-Adresse des Endgeräts 70 und gegebenenfalls ein Passwort. Wie oben bereits erläutert, kann anstelle des Sicherungsschlüssels eine Sitzungskennung einer verschlüsselten Kommunikationsverbindung in der Wiederholungs-Registrierungsanforderung oder der Verbindungsaufbau-Nachricht übertragen werden, wenn zuvor in Schritt 2 eine verschlüsselte Kommunikationsverbindung beispielsweise gemäß dem TLS-Protokoll aufgebaut und ein Verschlüsselungsschlüssel ausgehandelt worden ist. In diesem Fall wird in Schritt 16 eine verschlüsselte Kommunikationsverbindung zwischen dem Endgerät 70 und der Ersatz-P-CSCF-Instanz 53 beispielsweise gemäß dem TLS-Protokoll unter Verwendung des Verschlüsselungsschlüssels, der bereits in Schritt 2 zwischen dem Endgerät 70 und der primären P-CSCF-Instanz 51 ausgehandelt worden ist, aufgebaut, wobei die gleichen Kommunikationsprotokolle und Verschlüsselungsmechanismen wie beim Aufbau der verschlüsselten Kommunikationsverbindung zur primären P-CSCF-Instanz 51 angewendet werden. Angemerkt sei noch, dass der Verschlüsselungsschlüssel insbesondere im Endgerät 70 und in der gemeinsam genutzten Datenbank 52 sowie optional in Servern, in denen die jeweilige PCSCF-Instanz 51 bzw. 53 implementiert ist, gespeichert werden kann, um den P-CSCF-Instanzen 51 und 53 die Fortführung einer gültigen Registrierung des Endgeräts 70 zu ermöglichen, indem die entsprechenden Nachrichten verschlüsselt und entschlüsselt werden. Mit anderen Worten: Eine zunächst zwischen dem Endgerät 70 und der primären P-CSCF-Instanz 51 bestehende verschlüsselte Kommunikationsverbindung kann nach Ausfall der primären Instanz 51 anschließend auch zwischen dem Endgerät 70 und der Ersatz-P-CSCF-Instanz 53 fortgeführt werden, ohne dass ein neuer Verschlüsselungsschlüssel ausgehandelt werden muss.

Die Ersatz-P-CSCF-Instanz 53 ist dazu ausgebildet, unter Ansprechen auf die Wiederholungs-Registrierungsanforderung oder die Verbindungsaufbau-Nachricht in Schritt 17 auf die für das Endgerät 70 in der gemeinsam genutzten Datenbank 52 hinterlegten vorbestimmten teilnehmerbezogenen Registrierungsdaten zuzugreifen und zu prüfen, ob bereits eine gültige Registrierung des Endteilnehmers 70 vorliegt. Hierzu kann insbesondere die Gültigkeit des dem Endgerät 70 zugeordneten Sicherungsschlüssels, der in der Datenbank 52 hinterlegt ist, oder bei einer verschlüsselten Kommunikationsverbindung die Sitzungskennung der verschlüsselten Kommunikationsverbindung, die in der Datenbank 52 hinterlegt sein kann, geprüft werden. Ergibt die Prüfung, dass das Endgerät 70 bereits gültig am IPbasiertem Kommunikationssystem 50 registriert ist, signalisiert die Ersatz-P-CSCF-Instanz 53 in Schritt 18 dem IP-basierten Kommunikationssystem, insbesondere der S-CSCF-Instanz 54, dass sie nunmehr anstelle der primären P-CSCF-Instanz 51 dem Endgerät 70 zugeordnet ist, ohne dass sich das Endgerät erneut am IP-basierte Kommunikationssystem 50 authentifizieren bzw. registrieren muss.

Nach dem erfolgreichen Austausch der P-CSCF-Instanz 51 durch die Ersatz-P-CSCF-Instanz 53 überträgt in Schritt 19 gemäß einer vorteilhaften Implementierung nunmehr das Endgerät 70 vorzugsweise in regelmäßigen Zeitabständen Wiederholungs-Registrierungsanforderungen zur Ersatz-P-CSCF-Instanz 53, die unter Ansprechen auf jede Wiederholungs-Registrierungsanforderung prüft, ob eine gültige Registrierung für das Endgerät 70 vorliegt.

Wird während des fortgesetzten Betriebs die zuvor ausgefallene P-CSCF-Instanz 51 wiederhergestellt, kann zum Beispiel vorgesehen sein, dass die wiederhergestellte P-CSCF-Instanz 51 erneut an der S-CSCF-Instanz 54 angemeldet wird. Das IP-basierte Kommunikationssystem 50 und insbesondere die S-CSCF-Instanz 54 können gemäß einer vorteilhaften Implementierung dazu ausgebildet sein, beispielsweise unter Vermittlung der Ersatz-P-CSCF-Instanz 53 das Endgerät 70 zu informieren, dass es nunmehr wieder eine Wiederholungs-Registrierungsanforderung an die wiederhergestellte P-CSCF-Instanz 51 überträgt. Alternativ kann das Endgerät 70 zu vorbestimmten Zeitpunkten eine Wiederholungs-Registrierungsanforderung zur primären P-CSCF-Instanz 51 senden, um zu prüfen, ob die P-CSCF-Instanz 51 wieder im Betrieb ist und die Wiederholungs-Registrierungsanforderung ordnungsgemäß bestätigt. Unter Ansprechen auf eine empfangene Wiederholungs-Registrierungsanforderung und auf die in der Datenbank 52 für das Endgerät 70 hinterlegten vorbestimmten teilnehmerbezogenen Registrierungsdaten prüft nunmehr die wiederhergestellte P-CSCF-Instanz 51, ob das Endgerät 70 immer noch gültig am IP-basierten Kommunikationssystem 50 angemeldet ist. Wenn ja, kann die P-CSCF-Instanz 51 der S-CSCF-Instanz 54 signalisieren, dass sie nunmehr wieder für das Endgerät 70 zuständig ist, woraufhin beispielsweise die S-CSCF-Instanz 54 die Zuordnung der Ersatz-P-CSCF-Instanz 53 zum Endgerät 70 löscht.

Um bei einem Wechsel der Verbindungs-Steuerungsinstanzen, zum Beispiel bei einem Wechsel von der primären P-CSCF-Instanz 51 zur Ersatz-P_CSCF-Instanz 53 einen ordnungsgemäßen und effizienten Betrieb sicherzustellen, kann vorab ermittelt werden, ob das Endgerät 70 und insbesondere das IP-Kommunikationssystem 50 dazu ausgebildet sind, eine Recovery-Registrierungs-Prozedur, d.h. einen Verbindungs-Steuerungsinstanzen-Wechsel ohne Neuregistrierung des Endgeräts 70 und/oder dessen Nutzers am IP-Kommunikationssystem 50, zu unterstützen, wie dies oben beschrieben worden ist. Hierzu kann der zuvor in Verbindung mit Figur 2 erläuterte Schritt 2 beispielsweise wie nachfolgend erläutert erweitert werden.

Ist das Endgerät 70 dazu ausgebildet, eine Recovery-Registrierungs-Prozedur zu unterstützen, wird zunächst beim IP-Kommunikationssystem 50 angefragt, ob das IP-Kömmunikationssystem 50 die Recovery-Registrierungs-Prozedur unterstützt. Ein beispielhaftes Verfahren sieht hierzu vor, dass eine erste Registrierungsanforderung vom Endteilnehmer 70 zur primären P-CSCF-Instanz 51 übertragen wird, wobei die erste Registrierungsanforderung eine Anfrage nach einer Unterstützung der Recovery-Registrierungs-Prozedur enthält.

Unter Ansprechen auf die erste Registrierungsanforderung wird eine erste Registrierungsanforderungs-Antwort von der primären P-CSCF-Instanz 51 zum Endgerät 70 übertragen, wenn das IP-Kommunikationssystem 50 eine Recovery-Registrierungs-Prozedur unterstützt. Anschließend wird eine zweite Registrierungsanforderung vom Endgerät 70 zur primären P-CSCF-Instanz 51 übertragen, die vorzugsweise die Rufnummer des Endgeräts 70 und das Passwort des Nutzers enthalten kann. Danach wird, wie zuvor ausführlich erläutert, unter Mitwirkung der primären P-CSCF-Instanz 51, die auf die zweite Registrierungsanforderung anspricht, eine Authentifizierung des Endteilnehmers 70 und/oder dessen Nutzers und bei Ausfall der primären P-CSCF-Instanz 51 ein Wechsel auf die Ersatz-P-CSCF-Instanz 53 ohne Neuregistrierung des Endgeräts 70 und/oder dessen Nutzers durchgeführt.

Wird hingegen unterstellt, dass das Endgerät 70 an einem IP-Kommunikationssystem angeschlossen ist, welches nicht dazu ausgebildet ist, das Recovery-Registrierungs-Verfahren zu unterstützen, so wird unter Ansprechen auf die erste Registrierungsanforderung anstelle der ersten Registrierungsanforderungs-Antwort eine zweite Registrierungsanforderungs-Antwort von der primären P-CSCF-Instanz 51 zum Endteilnehmer 70 übertragen. Die zweite Registrierungsanforderungs-Antwort würde das Endgerät 70 veranlassen, bei Ausfall der primären P-CSCF-Instanz 51 keine Wiederholungs-Registrierungsanforderung, sondern sofort eine initiale Registrierungsanforderung zur Ersatz-P-CSCF-Instanz 53 zu übertragen, woraufhin unter Mitwirkung der Ersatz-P-CSCF-Instanz 53 erneut eine vollständige Registrierung des Endgeräts 70 und/oder dessen Nutzers durchgeführt werden würde.

Es versteht sich, dass die zuvor in Verbindung mit den Figuren 1 und 2 beschriebenen Verfahren auch bei mehr als einem Endteilnehmer in gleicher Weise anwendbar sind.

Zumindest einige der zuvor in Verbindung mit den Figuren erläuterten Aspekte werden nachfolgend noch einmal zusammengefasst.

Es wird ein Verfahren zum Wechseln von Verbindungs-Steuerungsinstanzen ohne Neuregistrierung von Endteilnehmern, die zuvor an einem IP-basierten Kommunikationssystem unter Anwendung eines IP-basierten Signalisierungsprotokolls registriert werden, zur Verfügung gestellt, wobei das IP-basierte Kommunikationssystem mehrere Verbindungs-Steuerungsinstanzen aufweist und insbesondere zur Steuerung und Übertragung von multimedialen Daten ausgebildet ist. Bei dem IP-basierten Kommunikationssystem kann es sich beispielsweise um das in Fig. 1 gezeigte IP-basierte Kommunikationssystem 10, welches zumindest die Verbindungs-Steuerungsinstanzen 11 und 13. aufweist, oder das in Fig. 2 gezeigte IP-basierte Kommunikationssystem 50, welches zumindest die Verbindungs-Steuerungsinstanzen 51, 53 und 54 aufweist handeln. Das Verfahren weist folgende Schritte auf:
a) Registrieren eines Endteilnehmers 30 bzw. 70 am IP-basierten Kommunikationssystem 10 bzw. 50, indem
   i) eine Kommunikationsverbindung vom Endteilnehmer 30 bzw. 70 zu einer ersten dem Endteilnehmer zugeordneten Verbindungs-Steuerungsinstanz 11 bzw. 51 der mehreren Verbindungs-Steuerungsinstanzen aufgebaut wird,
   ii) vom Endteilnehmer 30 bzw. 70 eine Registrierungsanforderung, zur ersten Verbindungs-Steuerungsinstanz 11 bzw. 51 übertragen wird,
   iii) unter Mitwirkung der ersten Verbindungs-Steuerungsinstanz 11 bzw. 51, die auf die Registrierungsanforderung anspricht, eine Authentifizierung des Endteilnehmers 30 bzw. 70 durchgeführt wird, wobei
   iv) bei einer erfolgreichen Authentifizierung des Endteilnehmers 30 bzw. 70 vorbestimmte endteilnehmerbezogene Registrierungsdaten in einer gemeinsam genutzten Datenbank 12 bzw. 52 gespeichert werden;
b) Übertragen einer Wiederholungs-Registrierungsanforderung vom Endteilnehmer 30 bzw. 70 zur ersten Verbindungs-Steuerungsinstanz 11 bzw. 53;
c) Prüfen, durch die erste Verbindungs-Steuerungsinstanz 11 bzw. 51, unter Ansprechen auf die Wiederholungs-Registrierungsanforderung, ob eine gültige Registrierung des Endteilnehmers 30 bzw. 70 in der Datenbank 12 bzw. 52 vorliegt;
d) Wiederholen der Schritte b) und c);
e) wird festgestellt, dass die erste Verbindungs-Steuerungsinstanz 11 bzw. 51 ausgefallen ist, dann
   i) Aufbauen einer Kommunikationsverbindung vom Endteilnehmer 30 bzw. 70 zu einer zweiten dem Endteilnehmer zugeordneten Verbindungs-Steuerungsinstanz 13 bzw. 53 der mehreren Verbindungs-Steuerungsinstanzen;
   ii) Übertragen einer Wiederholungs-Registrierungsanforderung oder einer Verbindungsaufbau-Nachricht vom Endteilnehmer 30 bzw. 70 zur zweiten Verbindungs-Steuerungsinstanz 13 bzw. 53;
   iii) Prüfen, durch die zweite Verbindungs-Steuerungsinstanz 13 bzw. 53, unter Ansprechen auf die Wiederholungs-Registrierungsanforderung oder die Verbindungsaufbau-Nachricht und anhand der in der gemeinsam genutzten Datenbank 12 bzw. 52 hinterlegten endteilnehmerbezogenen Registrierungsdaten, ob eine gültige Registrierung des Endteilnehmers 30 bzw. 70 vorliegt;
f) wenn ja, signalisieren, dem IP-basierten Kommunikationssystem 10 bzw. 50, dass nunmehr die zweite Verbindungs-Steuerungsinstanz 13 bzw. 53 anstelle der ersten Verbindungs-Steuerungsinstanz 11 bzw. 51 dem Endteilnehmer 30 bzw. 70 zugeordnet worden ist, ohne dass der Endteilnehmer erneut am IP-basierten Kommunikationssystem registriert wird.

Angemerkt sei, dass die in Schritt a)ii) übertragene Registrierungsanforderung auch als initiale Registrierungsanforderung bezeichnet werden kann.

Gemäß einer beispielhaften Implementierung können die endteilnehmerbezogenen Registrierungsdaten einen dem Endteilnehmer 30 bzw. 70 eindeutig zugeordneten Sicherungsschlüssel enthalten, der vom IP-basierten Kommunikationssystem 10 bzw. 50 erzeugt wird, wobei
der dem Endteilnehmer 30 bzw. 70 eindeutig zugeordnete Sicherungsschlüssel in der gemeinsam genutzten Datenbank 12 bzw. 52 gespeichert und zum Endteilnehmer 30 bzw. 70 übertragen und dort gespeichert wird, wobei der Sicherungsschlüssel, solange er gültig ist, in jeder vom Endteilnehmer 30 bzw. 70 erzeugten Wiederholungs-Registrierungsanforderung und Verbindungsaufbau-Nachricht übertragen wird.

Das IP-basierte Kommunikationssystem kann ein IMS-System 50 sein, wobei die erste und zweite Verbindungs-Steuerungsinstanz jeweils eine P-CSCF-Instanz 51 bzw. 53 ist, wobei
wenigstens eine weitere der Verbindungs-Steuerungsinstanzen eine S-CSCF-Instanz 54 ist, wobei in Schritt f) der S-CSCF-Instanz 54 mit geteilt wird, dass nunmehr die zweite P-CSCF-Instanz 53 dem Endteilnehmer 70 zugeordnet worden ist, und wobei
das IP-basierte Signalisierungsprotokoll das SIP-Protokoll sein kann.

Vorzugsweise ist der Endteilnehmer 30 bzw. 70 ein SIP-fähiges Endgerät ist.

Zweckmäßigerweise können die Registrierungsanforderung, die Wiederholungs-Registrierungsanforderungen und gegebenenfalls eine Verbindungsaufbau-Nachricht gemäß einem IP-basierten Transportprotokoll, insbesondere dem TCP-, UDP-, TLS-, DTLS- oder dem QUIC-Transportprotokoll übertragen werden.

Gemäß einer vorteilhaften Implementierung kann in Schritt a) ein Verschlüsselungsschlüssel zwischen dem Endteilnehmer 30 bzw. 50 und der ersten Verbindungs-Steuerungsinstanz 11 bzw. 51 ausgehandelt werden, wobei eine verschlüsselte Kommunikationsverbindung unter Verwendung des ausgehandelten Verschlüsselungsschlüssel zwischen dem Endteilnehmer 30 bzw. 70 und der ersten Verbindungs-Steuerungsinstanz 11 bzw. 51 aufgebaut wird, und wobei in Schritt e) unter Verwendung des in Schritt a) verwendeten Verschlüsselungsschlüssels eine verschlüsselte Kommunikationsverbindung zwischen dem Endteilnehmer 30 bzw. 70 und der zweiten Verbindungs-Steuerungsinstanz 13 bzw. 53 fortgeführt wird.

Vorzugsweise wird der in Schritt a) ausgehandelte Verschlüsselungsschlüssel im Endteilnehmer 30 bzw. 70 und in der gemeinsam genutzten Datenbank 12 und 52 zur weiteren Verwendung, insbesondere zur Entschlüsselung und Verschlüsselung von Nachrichten gespeichert.

Gemäß einer vorteilhaften Implementierung können nach Ausführung des Schrittes f) vorzugsweise in vorbestimmten Zeitabständen wiederholt Wiederholungs-Registrierungsanforderungen vom Endteilnehmer 30 bzw. 70 zur zweiten Verbindungs-Steuerungsinstanz 13 bzw. 53 übertragen werden, wobei unter Ansprechen auf eine empfangene Wiederholungs-Registrierungsanforderung von der zweiten Verbindungs-Steuerungsinstanz 13 bzw. 53 geprüft wird, ob die Registrierung des Endteilnehmers 30 bzw. 70 gültig ist.

Gemäß einer vorteilhaften Implementierung können Wiederholungs-Registrierungsanforderungen vom Endteilnehmer 30 bzw. 70 ohne erneute Registrierung des Endteilnehmers 30 bzw. 70 wieder zur ersten Verbindungs-Steuerungsinstanz 11 bzw. 51 übertragen werden, sobald die erste Verbindungs-Steuerungsinstanz 11 bzw. 51 vom IP-basierten Kommunikationssystem 10 bzw. 50 als funktionsfähig erkannt wird. Dieses Verhalten ist durch die gestrichelte Verbindungslinie 11 in Fig. 1 angedeutet.

Um einen ordnungsgemäßen und effizienten Betrieb zu ermöglichen, kann
Schritt a)ii) folgende Schritte aufweist:
Übertragen einer ersten Registrierungsanforderung vom Endteilnehmer 30 bzw. 70 zur ersten Verbindungs-Steuerungsinstanz 11 bzw. 51, wobei die erste Registrierungsanforderung eine Anfrage nach einer Unterstützung eines Verbindungs-Steuerungsinstanz-Wechsels ohne Neuregistrierung enthält;
Übertragen unter Ansprechen auf die erste
Registrierungsanforderung einer ersten
Registrierungsanforderungs-Antwort von der ersten Verbindungs-Steuerungsinstanz 11 bzw. 51 zum Endteilnehmer 30 bzw. 70, wenn das IP-Kommunikationssystem 10 bzw. 50 einen Verbindungs-Steuerungsinstanz-Wechsel ohne Neuregistrierung unterstützt; und
Übertragen einer zweiten Registrierungsanforderung vom Endteilnehmer 30 bzw. 70 zur ersten Verbindungs-Steuerungsinstanz 11 bzw. 51; und dass
in Schritt a)iii) unter Mitwirkung der ersten Verbindungs-Steuerungsinstanz 11 bzw. 51, die auf die zweite Registrierungsanforderung anspricht, eine Authentifizierung des Endteilnehmers 30 bzw. 70 durchgeführt wird.

Wenn hingegen das IP-Kommunikationssystem 10 bzw. 50 keinen Verbindungs-Steuerungsinstanz-Wechsel ohne Neuregistrierung unterstützt, wird unter Ansprechen auf die erste Registrierungsanforderung anstelle der ersten Registrierungsanforderungs-Antwort eine zweite Registrierungsanforderungs-Antwort von der ersten Verbindungs-Steuerungsinstanz 11 bzw. 51 zum Endteilnehmer 30 bzw. 70 übertragen, wobei
eine zweite Registrierungsanforderung vom Endteilnehmer 30 bzw. 70 zur ersten Verbindungs-Steuerungsinstanz 11 bzw. 51 übertragen wird, wobei
in Schritt a)iii) unter Mitwirkung der ersten Verbindungs-Steuerungsinstanz 11 bzw. 51, die auf die zweite Registrierungsanforderung anspricht, eine Authentifizierung des Endteilnehmers 30 bzw. 70 durchgeführt wird, wobei, wenn in Schritt e) festgestellt wird, dass die erste Verbindungs-Steuerungsinstanz 11 bzw. 51 ausgefallen ist, folgende Schritte ausgeführt werden:
   i) Aufbauen einer Kommunikationsverbindung vom Endteilnehmer 30 bzw. 70 zu einer zweiten dem Endteilnehmer zugeordneten Verbindungs-Steuerungsinstanz 13 bzw. 53 der mehreren Verbindungs-Steuerungsinstanzen;
   ii) Übertragen einer Registrierungsanforderung vom Endteilnehmer 30 bzw. 70 zur zweiten Verbindungs-Steuerungsinstanz 13 bzw. 53;
   iii) unter Mitwirkung der zweiten Verbindungs-Steuerungsinstanz 13 bzw. 53, die auf die Registrierungsanforderung anspricht, eine Authentifizierung des Endteilnehmers 30 bzw. 70 durchgeführt wird, wobei
f)bei einer erfolgreichen Authentifizierung des Endteilnehmers 30 bzw. 70 dem IP-basierten Kommunikationssystem 10 bzw. 50 signalisiert wird, dass nunmehr die zweite Verbindungs-Steuerungsinstanz 13 bzw. 53 anstelle der ersten Verbindungs-Steuerungsinstanz 11 bzw. 51 dem Endteilnehmer 30 bzw. 70 zugeordnet worden ist.

Gemäß einem weiteren Aspekt ist ein IP-basiertes Kommunikationssystem 10 bzw. 50 insbesondere zur Steuerung und Übertragung von multimedialen Daten vorgesehen, welches folgende Merkmale aufweisen kann:
mehrere Verbindungs-Steuerungsinstanzen 11, 13 bzw. 51, 53 und 54, die auf wenigstens einem Rechner des IP-basierten Kommunikationssystems 10 bzw. 50 ausführbar sind, einen Teilnehmerserver 14 bzw. 55, in dem endteilnehmerbezogene Informationen mehrerer Endteilnehmer gespeichert sind, und eine gemeinsam genutzte Datenbank 12 bzw. 52, in der endteilnehmerbezogene Registrierungsdaten wenigstens eines am IP-basierten Kommunikationssystem 10 bzw. 50 registrierten Endteilnehmers 30 bzw. 70 speicherbar sind, wobei wenigstens einige der mehreren Verbindungs-Steuerungsinstanzen auf die gemeinsam genutzte Datenbank zugreifen können, und wobei das IP-basierte Kommunikationssystem 10 bzw. 50 und der wenigstens eine registrieret Endteilnehmer 30 bzw. 70 zur Ausführung des Verfahrens nach einem der vorstehenden Ansprüche ausgebildet sind. Bei den endteilnehmerbezogenen Informationen kann es sich insbesondere um Benutzerkennungen, Kennwörter, also z.B. Passwörter, sowie IP-Adressen und Zugangsberechtigungen einer Vielzahl von Teilnehmern handeln, die unter anderem bei der Registrierung, d.h. der Authentisierung und gegebenenfalls Autorisierung von Endteilnehmern benötigt werden.

Vorteilhafterweise ist das IP-basierte Kommunikationssystem ein IMS-System 50, wobei
einige der mehreren Verbindungs-Steuerungsinstanzen P-CSCF-Instanzen 51 und 53 und wenigstens eine weitere Verbindungs-Steuerungsinstanz eine S-CSCF-Instanz 54 ist.

## Patentansprüche

1. Verfahren zum Wechseln von Verbindungs-Steuerungsinstanzen (11, 13; 51, 53) ohne Neuregistrierung von Endteilnehmern, die zuvor an einem IP-basierten Kommunikationssystem (10, 50) unter Anwendung eines IP-basierten Signalisierungsprotokolls registriert wurden, wobei das IP-basierte Kommunikationssystem (10; 50) mehrere Verbindungs-Steuerungsinstanzen (11, 13; 51, 53, 54) aufweist und insbesondere zur Steuerung und Übertragung von multimedialen Daten ausgebildet ist, mit folgenden Schritten:
a) Registrieren eines Endteilnehmers (30; 70) am IP-basierten Kommunikationssystem (10; 50), indem
i) eine Kommunikationsverbindung vom Endteilnehmer (30; 70) zu einer ersten dem Endteilnehmer zugeordneten Verbindungs-Steuerungsinstanz (11, 51) der mehreren Verbindungs-Steuerungsinstanzen aufgebaut wird,
ii) vom Endteilnehmer (30; 70) eine Registrierungsanforderung zur ersten Verbindungs-Steuerungsinstanz (11; 51) übertragen wird,
iii) unter Mitwirkung der ersten Verbindungs-Steuerungsinstanz (11, 51), die auf die Registrierungsanforderung anspricht, eine Authentifizierung des Endteilnehmers (30; 70) durchgeführt wird, wobei
iv) bei einer erfolgreichen Authentifizierung des Endteilnehmers (30; 70) vorbestimmte endteilnehmerbezogene Registrierungsdaten in einer gemeinsam genutzten Datenbank (12; 52) gespeichert werden;
b) Übertragen einer Wiederholungs-Registrierungsanforderung vom Endteilnehmer (30; 70) zur ersten Verbindungs-Steuerungsinstanz (11; 51);
c) Prüfen, durch die erste Verbindungs-Steuerungsinstanz (11; 51), unter Ansprechen auf die Wiederholungs-Registrierungsanforderung, ob eine gültige Registrierung des Endteilnehmers (30; 70) vorliegt;
d) Wiederholen der Schritte b) und c);
e) wird durch den Endteilnehmer (30, 70) festgestellt, dass die erste Verbindungs-Steuerungsinstanz (11; 51) ausgefallen ist, dann
i) Aufbauen einer Kommunikationsverbindung vom Endteilnehmer (30; 70) zu einer zweiten dem Endteilnehmer zugeordneten Verbindungs-Steuerungsinstanz (13; 53) der mehreren Verbindungs-Steuerungsinstanzen;
ii) Übertragen einer Wiederholungs-Registrierungsanforderung oder einer Verbindungsaufbau-Nachricht vom Endteilnehmer (30; 70) zur zweiten Verbindungs-Steuerungsinstanz (13; 53),
iii) Zugreifen, durch die zweite Verbindungs-Steuerungsinstanz, unter Ansprechen auf die Wiederholungs-Registrierungsanforderung oder die Verbindungsaufbau-Nachricht in Schritt e)ii) auf die gemeinsam genutzte Datenbank und Prüfen,
durch die zweite Verbindungs-Steuerungsinstanz (13, 53), unter Ansprechen auf die Wiederholungs-Registrierungsanforderung oder die Verbindungsaufbau-Nachricht in Schritt e)ii) und anhand der in der gemeinsam genutzten Datenbank (12; 52) hinterlegten endteilnehmerbezogenen Registrierungsdaten, ob eine gültige Registrierung des Endteilnehmers (30; 70) vorliegt;
f) wenn ja, signalisieren, dem IP-basierten Kommunikationssystem (10; 50), dass nunmehr die zweite Verbindungs-Steuerungsinstanz (13; 53) anstelle der ersten Verbindungs-Steuerungsinstanz (11; 51) dem Endteilnehmer (30; 70) zugeordnet worden ist, ohne dass der Endteilnehmer (30; 70) erneut am IP-basierten Kommunikationssystem (10; 50) registriert wird.

2. Verfahren nach Anspruch 1,
**dadurch gekennzeichnet, dass**
die endteilnehmerbezogenen Registrierungsdaten einen dem Endteilnehmer (30; 70) eindeutig zugeordneten Sicherungsschlüssel enthalten, der vom IP-basierten Kommunikationssystem (10; 50) erzeugt wird, und dass der dem Endteilnehmer (30; 70) eindeutig zugeordnete Sicherungsschlüssel in der gemeinsam genutzten Datenbank (12; 52) gespeichert und zum Endteilnehmer (30; 70) übertragen und dort gespeichert wird, wobei der Sicherungsschlüssel, solange er gültig ist, in jeder vom Endteilnehmer (30; 70) erzeugten Wiederholungs-Registrierungsanforderung übertragen wird.

3. Verfahren nach Anspruch 1 oder 2,
**dadurch gekennzeichnet, dass**
das IP-basierte Kommunikationssystem (50) ein IMS-System ist, dass
die erste und zweite Verbindungs-Steuerungsinstanz (51, 53) jeweils eine P-CSCF-Instanz ist, dass wenigstens eine weitere der Verbindungs-Steuerungsinstanzen (54) eine S-CSCF-Instanz ist, wobei in Schritt f) der S-CSCF-Instanz (54) mit geteilt wird, dass nunmehr die zweite P-CSCF-Instanz (53) dem Endteilnehmer (70) zugeordnet worden ist.

4. Verfahren nach einem der vorstehenden Ansprüche, **dadurch gekennzeichnet, dass**
der Endteilnehmer (30; 70) ein SIP-fähiges Endgerät ist.

5. Verfahren nach einem der vorstehenden Ansprüche, **dadurch gekennzeichnet, dass**
die Registrierungsanforderung, die Wiederholungs-Registrierungsanforderungen und gegebenenfalls eine Verbindungsaufbau-Nachricht gemäß einem IP-basierten Transportprotokoll, insbesondere dem TCP-, UDP-, TLS-, DTLS- oder dem QUIC-Transportprotokoll übertragen werden.

6. Verfahren nach einem der vorstehenden Ansprüche, **dadurch gekennzeichnet, dass**
in Schritt a) ein Verschlüsselungsschlüssel zwischen dem Endteilnehmer (30; 70) und der ersten Verbindungs-Steuerungsinstanz (11; 51) ausgehandelt wird, dass eine verschlüsselte Kommunikationsverbindung unter Verwendung des ausgehandelten Verschlüsselungsschlüssel zwischen dem Endteilnehmer (30; 70) und der ersten Verbindungs-Steuerungsinstanz (11; 51) aufgebaut wird, dass
in Schritt e) unter Verwendung des in Schritt a) verwendeten Verschlüsselungsschlüssels eine verschlüsselte Kommunikationsverbindung zwischen dem Endteilnehmer (30; 70) und der zweiten Verbindungs-Steuerungsinstanz (13; 53) fortgeführt wird.

7. Verfahren nach Anspruch 6,
**dadurch gekennzeichnet, dass**
der in Schritt a) ausgehandelte Verschlüsselungsschlüssel im Endteilnehmer (30; 70) und in der gemeinsam genutzten Datenbank (12; 52) zur weiteren Verwendung gespeichert wird.

8. Verfahren nach einem der vorstehenden Ansprüche, **dadurch gekennzeichnet, dass**
nach Ausführung des Schrittes f) in vorbestimmten Zeitabständen wiederholt Wiederholungs-Registrierungsanforderungen vom Endteilnehmer (30; 70) zur zweiten Verbindungs-Steuerungsinstanz (13; 53) übertragen werden, wobei unter Ansprechen auf eine empfangene Wiederholungs-Registrierungsanforderung von der zweiten Verbindungs-Steuerungsinstanz (13; 53) geprüft wird, ob die Registrierung des Endteilnehmers (30; 70) gültig ist.

9. Verfahren nach einem der vorstehenden Ansprüche, **dadurch gekennzeichnet, dass** Wiederholungs-Registrierungsanforderungen vom Endteilnehmer (30; 70) ohne erneute Registrierung des Endteilnehmers wieder zur ersten Verbindungs-Steuerungsinstanz (11; 51) übertragen werden, sobald die erste Verbindungs-Steuerungsinstanz (11; 51) vom IP-basierten Kommunikationssystem (10; 50) als funktionsfähig erkannt wird.

10. Verfahren nach einem der vorstehenden Ansprüche, **dadurch gekennzeichnet, dass**
Schritt a)ii) folgende Schritte aufweist: Übertragen einer ersten Registrierungsanforderung vom Endteilnehmer (30; 70) zur ersten Verbindungs-Steuerungsinstanz (11; 51), wobei die erste Registrierungsanforderung eine Anfrage nach einer Unterstützung eines Verbindungs-Steuerungsinstanz-Wechsels ohne Neuregistrierung enthält;
Übertragen unter Ansprechen auf die erste Registrierungsanforderung einer ersten Registrierungsanforderungs-Antwort von der ersten Verbindungs-Steuerungsinstanz (11; 51) zum Endteilnehmer (30; 70), wenn das IP-Kommunikationssystem(10; 50) einen Verbindungs-Steuerungsinstanz-Wechsel ohne Neuregistrierung unterstützt; und
Übertragen einer zweiten Registrierungsanforderung vom Endteilnehmer (30; 70) zur ersten Verbindungs-Steuerungsinstanz (11; 51); und dass in Schritt a)iii) unter Mitwirkung der ersten Verbindungs-Steuerungsinstanz (11, 51), die auf die zweite Registrierungsanforderung anspricht, eine Authentifizierung des Endteilnehmers (30; 70) durchgeführt wird.

11. Verfahren nach einem der vorstehenden Ansprüche, **dadurch gekennzeichnet, dass**
vor Schritt a) folgender Schritt ausgeführt wird: Abrufen, durch den Endteilnehmer (30, 70), der IP-Adresse der ersten Verbindungs-Steuerungsinstanz (11, 51) und der zweiten Verbindungs-Steuerungsinstanz (13, 53) von einem Domain Name Server (20).

12. IP-basiertes Kommunikationssystem (10; 50) insbesondere zur Steuerung und Übertragung von multimedialen Daten aufweisend:
mehrere Verbindungs-Steuerungsinstanzen (11, 13; 51, 53, 54), die auf wenigstens einem Rechner des IP-basierten Kommunikationssystems ausführbar sind, einen Teilnehmerserver (14; 55), in dem endteilnehmerbezogene Informationen mehrerer Endteilnehmer gespeichert sind, und
eine gemeinsam genutzte Datenbank (12; 52), in der endteilnehmerbezogene Registrierungsdaten wenigstens eines am IP-basierten Kommunikationssystem (10; 50) registrierten Endteilnehmers (30; 70) speicherbar sind, wobei wenigstens eine erste und eine zweite Verbindungs-Steuerungsinstanz (11, 13, 51, 53) der mehreren Verbindungs-Steuerungsinstanzen (11, 13, 51, 53, 54) auf die gemeinsam genutzte Datenbank (12; 52) zugreifen können, und wobei das IP-basierte Kommunikationssystem (10; 50) und der wenigstens ein Endteilnehmer (30; 70) zur Ausführung des Verfahrens nach einem der vorstehenden Ansprüche ausgebildet sind.

13. IP-basiertes Kommunikationssystem nach Anspruch 11, **dadurch gekennzeichnet, dass**
das IP-basierte Kommunikationssystem ein IMS-System ist, dass
die erste und zweite Verbindungs-Steuerungsinstanz der mehreren Verbindungs-Steuerungsinstanzen (51, 53) jeweils eine P-CSCF-Instanz und wenigstens eine weitere Verbindungs-Steuerungsinstanz (54) der mehreren Verbindungs-Steuerungsinstanzen eine S-CSCF-Instanz ist.

14. IP-basiertes Kommunikationssystem nach Anspruch 12 oder 13,
**gekennzeichnet durch**
einen Domain Name Server (20), wobei der wenigstens eine Endteilnehmer (30; 70) dazu konfiguriert ist, die IP-Adresse der ersten und zweiten Verbindungs-Steuerungsinstanz (11, 13, 51, 53) vom Domain Name Server (20) abzurufen und die erste Verbindungs-Steuerungsinstanz (11, 51) als primäre Verbindungs-Steuerungsinstanz und die zweite Verbindungs-Steuerungsinstanz (13, 53) als Ersatz-Verbindungs-Steuerungsinstanz zu verwenden.

## Claims

1. A method for changing link control instances (11,13; 51, 53) without re-registering end subscribers previously registered to an IP-based communication system (10, 50) using an IP-based signaling protocol, wherein the IP-based communication system 10;50) comprises a plurality of link control instances (11, 13; 51, 53, 54) and is designed in particular for controlling and transmitting multimedia data, wherein the method comprises the following steps:
a) Registering an end subscriber (30; 70) to the IP-based communication system (10; 50) in that
i) a communication link is established from the end subscriber (30; 70) to a first link control instance (11, 51) of the plurality of link control instances, wherein the first link control instance (11, 51) is associated with the end subscriber;
ii) a registration request is transmitted from the end subscriber (30; 70) to the first link control instance (11; 51);
iii) an authentication of the end subscriber (30; 70) is performed with the cooperation of the first link control instance (11, 51), which is responsive to the registration request, wherein
iv) upon successful authentication of the end subscriber (30; 70) predetermined end subscriber-related registration data is stored in a shared database (12; 52);
b) Transmitting a repeat-registration request form the end subscriber (30; 70) to the first link control instance (11; 51);
c) Checking, by the first link control instance (11; 51), in response to the repeat-registration request, whether there is a valid registration of the end subscriber (30; 70);
d) Repeating steps b) and c);
e) if it is determined by the end subscriber (30, 70) that the first link control instance (11; 51) has failed, then
i) establishing a communication link from the end subscriber (30; 70) to a second link control instance (13; 53) of the plurality of link control instances associated with the end subscriber;
ii) Transmitting a repeat-registration request or a connection setup message from the end subscriber (30; 70) to the second link control instance (13; 53),
iii) accessing, by the second link control instance, in response to the repeat-registration request or the connection setup message in step e)ii) the shared database and checking, by the second link control instance (13, 53), in response to repeat-registration request or the connection setup message in step e)ii) and based on the end subscriber-related registration data stored in the shared database (12;52), whether there is a valid registration of the end subscriber (30; 70);
f) if so, signaling to the IP-based communication system (10; 50) that now the second link control instance (13; 53) has been assigned to the end subscriber (30; 70) instead of the first link control instance (11; 51) without the end subscriber (30; 70) being registered again with the IP-based communication system (10;50).

2. The method according to claim 1, **characterized in that** the end subscriber-related registration data includes a security key uniquely assigned to the end subscriber (30; 70), which security key is generated by the IP-based communication system (10; 50), and that the security key uniquely assigned to the end subscriber (30; 70) is stored in the shared database (12; 52) and transmitted to and stored in the end subscriber (30; 70), the security key being transmitted, as long as it is valid, in each repeat-registration request generated by the end subscriber (30;70).

3. The method according to claim 1 or 2,
**characterized in that**
the IP-based communication system (50) is an IMS-system, that
the first and second link control instances (51, 53) are each a P-CSCF instance, that
at least one further one of the link control instances (54) is an S-CSCF instance, wherein in step f) the S-CSCF instance (54) is informed that the second P-CSCF instance (53) is now assigned to the end subscriber (70) .

4. The method according to any one of the preceding claims, **characterized in that**
the end subscriber (30; 70) is a SIP-capable terminal.

5. The method according to any one of the preceding claims, **characterized in that**
the registration request, the repeat registration requests and, if applicable, a connection setup message are transmitted according to an IP-based transport protocol, in particular the TCP, UDP, TLS, DTLS or the QUIC transport protocol.

6. The method according to any one of the preceding claims, **characterized in that**
in step a) an encryption key is negotiated between the end subscriber (30; 70) and the first link control instance (11; 51), that
an encrypted communication link using the negotiated encryption key is established between the end subscriber (30; 70) and the first link control instance (11; 51), that
in step e), using the encryption key used in step a), an encrypted communication link is continued between the end subscriber (30; 70) and the second link control instance (13; 53).

7. The method according to claim 6,
**characterized in that**
the encryption key negotiated in step a) is stored in the end subscriber user (30; 70) and in the shared database (12; 52) for further use.

8. The method according to any one of the preceding claims, **characterized in that**
after execution of step f), repeat-registration requests are transmitted repeatedly at predetermined time intervals from the end subscriber (30; 70) to the second link control instance (13; 53), wherein, in response to a received repeat-registration request, it is checked by the second link control instance (13; 53), whether the registration of the end subscriber (30; 70) is valid.

9. The method according to any one of the preceding claims, **characterized in that**
repeat registration requests are transmitted again from the end subscriber (30; 70) to the first link control instance (11; 15) without re-registration of the end subscriber, as soon as the first link control instance (11; 51) is recognized by the IP-based communication system (10; 50) as functional.

10. The method according to any one of the preceding claims, **characterized in that**
step a)ii) comprises the following steps:
Transferring a first registration request from the end subscriber (30; 70) to the first link control instance (11; 51), wherein the first registration request includes a request for support of a link control instance change without re-registration;
transmitting, in response to the first registration request, a first registration request response from the first link control instance (11; 51) to the end subscriber (30; 70), if the IP communication system (10; 50) supports a link control instance change without re-registration; and
transmitting a second registration request from the end subscriber (30; 70) to the first link control instance (11; 51); and that
in step a)iii), an authentication of the end subscriber (30; 70) is performed with the cooperation of the first link control instance (11,51) responsive to the second registration request.

11. The method according to any one of the preceding claims, **characterized in that**
before performing step a), the following step is performed:
Retrieving, by the end subscriber (30, 70), the IP address of the first link control instance (11, 51) and of the second link control instance (13, 53) from a domain name server (20).

12. An IP-based communication system (10; 50) in particular for controlling and transmitting multimedia data, comprising:
a plurality of link control instances (11, 13; 53, 54) executable on at least one computer of the IP-based communication system,
a subscriber server (14; 55) in which end subscriber-related information of a plurality of end subscribers is stored, and
a shared database (12; 52) in which end subscriber-related registration data of at least one end subscriber registered on the IP-based communication system(10; 50) is storable, wherein
at least a first and a second link control instance (11, 13, 51, 53) of the plurality of link control instances (11, 13, 51, 54) can access the shared database (12; 52), and wherein
the IP-based communication system (10; 50) and the at least one end subscriber (30; 70) are adapted to perform the method according to any one of the preceding claims.

13. The IP-based communication system according to claim 11 **characterized in that**
the IP-based communication system is an IMS system, the first and second link control instances of the plurality of link control instances (51, 53) are each a P-CSCF instance, and at least one further link control instance (54) of the plurality of link control instances is an S-CSCF instance.

14. The IP-based communication system according to claim 12 or 13, **characterized by**
a domain name server (20), wherein the at least one end subscriber (30; 70) is configured to retrieve the IP address of the first and second link control entities (11, 13, 51, 53) from the domain name server (20) and to use the first link control instance (11, 51) as the primary link control instance and the second link control instance (13, 53) as a replacement link control instance.

## Revendications

1. Procédé pour le changement d'instances de commande de connexion (11, 13 ; 51, 53) sans nouvel enregistrement d'abonnés finaux, qui ont été enregistrés préalablement sur un système de communication basé sur IP (10, 50) au moyen d'un protocole de signalisation basé sur IP, dans lequel le système de communication basé sur IP (10 ; 50) présente plusieurs instances de commande de connexion (11, 13 ; 51, 53, 54) et en particulier est réalisé pour la commande et la transmission de données multi-média, avec les étapes suivantes :
a) l'enregistrement d'un abonné final (30 ; 70) sur le système de communication basé sur IP (10 ; 50), du fait que
i) une connexion de communication à partir de l'abonné final (30 ; 70) vers une première instance de commande de connexion (11, 51) des plusieurs instances de commande de connexion associée à l'abonné final est établie,
ii) une demande d'enregistrement est transmise vers la première instance de commande de connexion (11 ; 51) à partir de l'abonné final (30 ; 70),
iii) avec le concours de la première instance de commande de connexion (11, 51), qui réagit à la demande d'enregistrement, une authentification de l'abonné final (30 ; 70) est réalisée, où
iv) lors d'une authentification réussie de l'abonné final (30 ; 70) des données d'enregistrement liées à l'abonné final prédéfinies sont stockées dans une base de données utilisée en commun (12 ; 52) ;
b) la transmission d'une demande d'enregistrement de répétition à partir de l'abonné final (30 ; 70) vers la première instance de commande de connexion (11 ; 51) ;
c) le fait de contrôler, par la première instance de commande de connexion (11 ; 51), en réaction à la demande d'enregistrement de répétition, si un enregistrement valide de l'abonné final (30 ; 70) est présent ;
d) la répétition des étapes b) et c) ;
e) s'il est constaté par l'abonné final (30, 70) que la première instance de commande de connexion (11 ; 51) n'est pas effectuée, alors
i) l'établissement d'une connexion de communication à partir de l'abonné final (30 ; 70) vers une deuxième instance de commande de connexion (13 ; 53) des plusieurs instances de commande de connexion associée à l'abonné final ;
ii) la transmission d'une demande d'enregistrement de répétition ou d'un message d'établissement de connexion à partir de l'abonné final (30 ; 70) vers la deuxième instance de commande de connexion (13 ; 53),
iii) l'accès, par la deuxième instance de commande de connexion, en réaction à la demande d'enregistrement de répétition ou au message d'établissement de connexion à l'étape e)ii) à la base de données utilisée en commun et le fait de contrôler, par la deuxième instance de commande de connexion (13, 53), en réaction à la demande d'enregistrement de répétition ou au message d'établissement de connexion à l'étape e)ii) et sur la base des données d'enregistrement relatives à l'abonné final stockées dans la base de données utilisée en commun (12 ; 52), si un enregistrement valide de l'abonné final (30 ; 70) est présent ;
f) si oui, la signalisation, au système de communication basé sur IP (10 ; 50), qu'à présent la deuxième instance de commande de connexion (13 ; 53) a été associée à la place de la première instance de commande de connexion (11 ; 51) à l'abonné final (30 ; 70), sans que l'abonné final (30 ; 70) ne soit à nouveau enregistré sur le système de communication basé sur IP (10 ; 50).

2. Procédé selon la revendication 1, **caractérisé en ce que**
les données d'enregistrement relatives à l'abonné final contiennent une clé de sécurité clairement associée à l'abonné final (30 ; 70), qui est générée par le système de communication basé sur IP (10 ; 50), et que la clé de sécurité clairement associée à l'abonné final (30 ; 70) est stockée dans la base de données utilisée en commun (12 ; 52) et transmise à l'abonné final (30 ; 70) et stockée à cet endroit, où la clé de sécurité, tant qu'elle est valide, est transmise dans chaque demande d'enregistrement de répétition générée par l'abonné final (30 ; 70).

3. Procédé selon la revendication 1 ou 2, **caractérisé en ce que**
le système de communication basé sur IP (50) est un système IMS, que
la première et deuxième instance de commande de connexion (51, 53) est respectivement une instance P-CSCF, qu'au moins une autre des instances de commande de connexion (54) est une instance S-CSCF, où à l'étape f) l'instance S-CSCF (54) est informée qu'à présent la deuxième instance P-CSCF (53) a été associée à l'abonné final (70).

4. Procédé selon l'une quelconque des revendications précédentes, **caractérisé en ce que**
l'abonné final (30 ; 70) est un terminal compatible SIP.

5. Procédé selon l'une quelconque des revendications précédentes, **caractérisé en ce que**
la demande d'enregistrement, les demandes d'enregistrement de répétition et éventuellement un message d'établissement de connexion sont transmis selon un protocole basé sur IP, en particulier le protocole de transport TCP, UDP, TLS, DTLS ou QUIC.

6. Procédé selon l'une quelconque des revendications précédentes, **caractérisé en ce que**
à l'étape a) une clé de chiffrement est négociée entre l'abonné final (30 ; 70) et la première instance de commande de connexion (11 ; 51), qu'une connexion de communication chiffrée est établie au moyen de la clé de chiffrement négociée entre l'abonné final (30 ; 70) et la première instance de commande de connexion (11 ; 51), que
à l'étape e) au moyen de la clé de chiffrement utilisée à l'étape a) une connexion de communication chiffrée entre l'abonné final (30 ; 70) et la deuxième instance de commande de connexion (13 ; 53) est poursuivie.

7. Procédé selon la revendication 6, **caractérisé en ce que**
la clé de chiffrement négociée à l'étape a) est stockée dans l'abonné final (30 ; 70) et dans la base de données utilisée en commun (12 ; 52) pour une utilisation ultérieure.

8. Procédé selon l'une quelconque des revendications précédentes, **caractérisé en ce que**
après exécution de l'étape f) les demandes d'enregistrement de répétition sont transmises par intervalles de temps prédéfinis de manière répétée à partir de l'abonné final (30 ; 70) vers la deuxième instance de commande de connexion (13 ; 53), où, en réaction à une demande d'enregistrement de répétition reçue, il est contrôlé par la deuxième instance de commande de connexion (13 ; 53) si l'enregistrement de l'abonné final (30 ; 70) est valide.

9. Procédé selon l'une quelconque des revendications précédentes, **caractérisé en ce que**
des demandes d'enregistrement de répétition sont transmises à partir de l'abonné final (30 ; 70) sans nouvel enregistrement de l'abonné final à nouveau vers la première instance de commande de connexion (11 ; 51), dès que la première instance de commande de connexion (11 ; 51) est reconnue par le système de communication basé sur IP (10 ; 50) comme opérationnel.

10. Procédé selon l'une quelconque des revendications précédentes, **caractérisé en ce que**
l'étape a)ii) présente les étapes suivantes :
la transmission d'une première demande d'enregistrement à partir de l'abonné final (30 ; 70) vers la première instance de commande de connexion (11 ; 51), où la première demande d'enregistrement contient une sollicitation d'assistance d'un changement d'instance de commande de connexion sans nouvel enregistrement ;
la transmission en réaction à la première demande d'enregistrement d'une première réponse à la demande d'enregistrement à partir de la première instance de commande de connexion (11 ; 51) vers l'abonné final (30 ; 70), lorsque le système de communication IP (10 ; 50) assiste un changement d'instance de commande de connexion sans nouvel enregistrement ; et
la transmission d'une deuxième demande d'enregistrement à partir de l'abonné final (30 ; 70) vers la première instance de commande de connexion (11 ; 51) ; et que
à l'étape a)iii) avec le concours de la première instance de commande de connexion (11, 51), qui réagit à la deuxième demande d'enregistrement, une authentification de l'abonné final (30 ; 70) est réalisée.

11. Procédé selon l'une quelconque des revendications précédentes, **caractérisé en ce que**
avant l'étape a) l'étape suivante est exécutée :
l'interrogation, par l'abonné final (30, 70), de l'adresse IP de la première instance de commande de connexion (11, 51) et de la deuxième instance de commande de connexion (13, 53) par un serveur de noms de domaine (20) .

12. Système de communication basé sur IP (10 ; 50) en particulier pour la commande et la transmission de données multi-média présentant :
plusieurs instances de commande de connexion (11, 13 ; 51, 53, 54), qui peuvent être exécutées sur au moins un calculateur du système de communication basé sur IP,
un serveur d'abonné (14 ; 55), dans lequel des informations relatives à l'abonné final de plusieurs abonnés finaux sont stockées, et
une base de données utilisée en commun (12 ; 52), dans laquelle des données d'enregistrement relatives à l'abonné final d'au moins un abonné final (30 ; 70) enregistré sur le système de communication basé sur IP (10 ; 50) peuvent être stockées, où au moins une première et une deuxième instance de commande de connexion (11, 13, 51, 53) des plusieurs instances de commande de connexion (11, 13, 51, 53, 54) peuvent accéder à la base de données utilisée en commun (12 ; 52), et où le système de communication basé sur IP (10 ; 50) et l'au moins un abonné final (30 ; 70) sont réalisés pour la mise en oeuvre du procédé selon l'une quelconque des revendications précédentes.

13. Système de communication basé sur IP selon la revendication 11, **caractérisé en ce que**
le système de communication basé sur IP est un système IMS, que
la première et deuxième instance de commande de connexion des plusieurs instances de commande de connexion (51, 53) est respectivement une instance P-CSCF et au moins une autre instance de commande de connexion (54) des plusieurs instances de commande de connexion est une instance S-CSCF.

14. Système de communication basé sur IP selon la revendication 12 ou 13, **caractérisé par**
un serveur de noms de domaine (20), où
l'au moins un abonné final (30 ; 70) est configuré pour interroger l'adresse IP de la première et deuxième instance de commande de connexion (11, 13, 51, 53) du serveur de noms de domaine (20) et utiliser la première instance de commande de connexion (11, 51) comme instance de commande de connexion primaire et la deuxième instance de commande de connexion (13, 53) comme instance de commande de connexion de remplacement.
